(19) Europäisches Patentamt / European Patent Office / Office européen des brevets

(11) **EP 2 512 775 B1**

(12) **EUROPÄISCHE PATENTSCHRIFT**

(45) Veröffentlichungstag und Bekanntmachung des Hinweises auf die Patenterteilung:
**11.06.2014   Patentblatt 2014/24**

(51) Int Cl.:
*B29C 47/40* (2006.01)   *B29C 47/10* (2006.01)
*B29C 47/60* (2006.01)   *B29C 47/76* (2006.01)

(21) Anmeldenummer: **10796002.3**

(22) Anmeldetag: **13.12.2010**

(86) Internationale Anmeldenummer:
**PCT/EP2010/069470**

(87) Internationale Veröffentlichungsnummer:
**WO 2011/073121 (23.06.2011 Gazette 2011/25)**

(54) **SCHNECKENELEMENTE ZUR EXTRUSION VISKOELASTISCHER MASSEN, VERWENDUNG UND VERFAHREN**

SCREW ELEMENTS FOR EXTRUDING VISCOELASTIC MASSES, USE AND METHOD

ÉLÉMENTS DE VIS SANS FIN POUR L'EXTRUSION DE MATIÈRES VISCOÉLASTIQUES, UTILISATION ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2009   DE 102009059072**

(43) Veröffentlichungstag der Anmeldung:
**24.10.2012   Patentblatt 2012/43**

(60) Teilanmeldung:
**13156356.1 / 2 610 045**

(73) Patentinhaber: **Bayer Intellectual Property GmbH**
**40789 Monheim (DE)**

(72) Erfinder:
• **KIRCHHOFF, Jörg**
  **2040 Antwerpen (BE)**
• **KÖNIG, Thomas**
  **51375 Leverkusen (DE)**
• **BIERDEL, Michael**
  **51373 Leverkusen (DE)**
• **LIESENFELDER, Ulrich**
  **51469 Bergisch Gladbach (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
EP-A2- 1 013 402        WO-A1-00/20189
WO-A1-02/070231        WO-A1-02/076707
WO-A1-2011/039016      WO-A2-02/09919

• DATABASE WPI Week 198311 Thomson Scientific, London, GB; AN 1983-25798K XP002637543, -& JP 58 017825 A (KOBE STEEL LTD) 2. Februar 1983 (1983-02-02)

**Beschreibung**

Die Erfindung betrifft neuartige Schneckenelemente für mehrwellige Schneckenmaschinen mit paarweise gleichsinnig drehenden und paarweise exakt abschabenden Schneckenprofilen, die Verwendung der Schneckenelemente in mehrwelligen Schneckenmaschinen und ein Verfahren zur Extrusion viskoelastischer Massen.

Gleichsinnig drehende Zwei- oder ggf. Mehrwellenmaschinen, deren Rotoren sich gegenseitig exakt abschaben, sind bereits seit langem bekannt. Einen umfassenden Überblick über solche Schneckenextruder gibt die folgende Veröffentlichung [1] = Kohlgrüber: Der gleichläufige Doppelsclneckenex-truder. Hanser Verlag, München, 2007.

In der Veröffentlichung [1] werden insbesondere der Aufbau, die Funktion und der Betrieb von Zwei- und Mehrwellenextrudern ausführlich erläutert. Ein eigenes Kapitel (Seiten 227 - 248) ist den Schneckenelementen und ihrer Wirkungsweise gewidmet. Hier werden der Aufbau und die Funktion von Förder-, Knet- und Mischelementen detailliert erläutert.

Moderne Schneckenextruder verfügen über ein Baukastensystem, bei dem verschiedene Schneckenelemente auf einer Kemwelle aufgezogen werden können. Hiermit kann der Fachmann den Schneckenextruder an die jeweilige Verfahrensaufgabe anpassen.

Bei der Beschreibung von Schneckenelementen wird üblicherweise das Querschnittsprofil senkrecht zur Drehachse betrachtet - nachfolgend auch kurz als Profil bezeichnet. Ein Paar von Schneckenelementen besteht aus einem Schneckelement mit einem erzeugenden Schneckenprofil und einem Schneckenelement mit einem erzeugten Schneckenprofil.

Die Bereiche eines Schneckenprofils, die gleich dem Schneckenaußenradius sind, werden als Kammbereiche bezeichnet. Der Winkel zwischen dem Anfangs- und dem Endpunkt eines Kammbereichs bezogen auf den Drehpunkt des Schneckenprofils wird als Kammwinkel bezeichnet. Ein Kammbereich, der den Schneckenaußenradius nur in einem Punkt berührt, besitzt den Kammwinkel 0 - Anfangs- und Endpunkt fallen in einem Punkt zusammen. Die Bereiche eines Schneckenprofils, die gleich dem Kernradius sind, werden als Nutbereiche bezeichnet. Der Winkel zwischen dem Anfangsund dem Endpunkt eines Nutbereichs bezogen auf den Drehpunkt des Schneckenprofils wird als Nutwinkel bezeichnet. Ein Nutbereich, der den Kernradius nur in einem Punkt berührt, besitzt den Nutwinkel 0 - Anfangs- und Endpunkt sind auch hier identisch. Die Bereiche eines Schneckenprofils, die kleiner als der Schneckenaußenradius und größer als der Kernradius sind, werden als Flankenbereiche bezeichnet. Entsprechend wird der Winkel zwischen dem Anfangs- und dem Endpunkt eines Flankenbereichs bezogen auf den Drehpunkt des Schneckenprofils als Flankenwinkel bezeichnet. Der Bereich eines Mehrwellenextruders, in dem sich zwei Gehäusebohrungen durchdringen, wird als Zwickelbereich bezeichnet. Die beiden Schnittpunkte von zwei Gehäusebohrungen werden als Gehäusezwickel bezeichnet [1].

In der Polymerherstellung und Polymerverarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in der Veröffentlichung [1] auf den Seiten 96 - 109 dargestellt. Hier ist auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.

Gleichsinnig drehende Zwei- oder Mehrwellenmaschinen werden vor allem zur Extrusion plastischer Massen verwendet. Unter einer plastischen Masse wird eine verformbare Masse verstanden. Beispiele für plastische Massen sind Polymerschmelzen, vor allem von Thermoplasten und Elastomeren, Mischungen von Polymerschmelzen oder Dispersionen von Polymerschmelzen mit Feststoffen, Flüssigkeiten und/oder Gasen.

Unter Extrusion wird die Behandlung eines Stoffes oder Stoffgemisches in einem gleichsinnig drehenden Doppelschnecken- oder Mehrwellenextruder, wie er umfassend in [1] beschrieben ist, verstanden. Die Behandlung von Stoffen während einer Extrusion umfasst eine oder mehrere der Ver-fahrensoperationen Fördern, Aufschmelzen, Dispergieren, Mischen, Entgasen und Druckaufbau.

Die Extrusion spielt insbesondere bei der Herstellung, Aufbereitung und Verarbeitung von Polymeren eine große Rolle.

Bei der Herstellung von Polymeren erfolgt eine Extrusion z.B. zur Entgasung der Polymere (siehe z.B. [1] Seiten 191 bis 212).

Bei der Aufbereitung von Polymeren erfolgt eine Extrusion z.B. zur Einmischung von Zusatzstoffen oder zum Mischen von verschiedenen Polymeren, die sich z.B. in chemischer Zusammensetzung, Molekulargewicht oder Molekülstruktur unterscheiden (siehe z.B. [1] Seiten 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe, die üblicherweise aufgeschmolzen werden, und unter Zugabe und Einmischen von Füll- und/oder Verstärkungsstoffen, Weichmachern, Haftvermittlern, Gleitmitteln, Stabilisatoren, Farben etc. Die Aufbereitung umfasst häufig auch die Entfernung von flüchtigen Bestandteilen wie z.B. Luft und Wasser. Die Entfernung der flüchtigen Bestandteile geschieht in diesem Fall durch Öffnungen in den ansonsten geschlossenen Schneckengehäusen, den sogenannten Entgasungsöffnungen. Derartige Entgasungsöffnungen können eine oder beide Schneckenwellen freilassen. Da Extruder bekanntlich durch Reibung fördern, ist bei einer Entgasungsöffnung die Förderleistung des Extruders verringert und es erhöht sich der Füllgrad an dieser Stelle. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts beinhalten.

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erfolgen. Die Verarbeitung kann auch Mischungen von Polymeren mit Füll- und Zuschlagstoffen und Additiven sowie chemische Modifikationen wie z.B. Vulkanisation umfassen.

In der Veröffentlichung [1] auf Seite 73ff wird die Schmelzeförderung und der Druckaufbau beschrieben. Die Schmelzeförderzonen in Extruderschnecken dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen. Die zum Fördern benötigte Energie wird dissipiert und macht sich nachteilig in einer Temperaturerhöhung der Polymerschmelze bemerkbar. In einer Förderzone sollten daher Schneckenelemente verwendet werden, die möglichst wenig Energie dissipieren. Für die reine Schmelzeförderung sind Gewindeelemente mit Gangsteigungen von etwa einmal dem Extruderinnendurchmesser üblich.

Ein besonders großes Fördervermögen wird in Extruderschnecken an den Stellen benötigt, wo seitlich eine zweite Maschine angebaut ist, über die ein Teilstrom der zu extrudierenden Masse zugeführt wird. Eine an dieser Stelle in idealer Wiese an die Erfordernisse angepasste Maschine würde auf der Welle, die den zugeführten Teilstrom aufnehmen muss, ein im Vergleich zu der zweiten Welle erhöhtes Fördervermögen aufweisen. Bei Schneckenprofilen nach dem Stand der Technik ist dies jedoch nicht der Fall.

Es ist bekannt ([1], S. 106) dass das Fördervermögen eines Doppelschneckenextruders ungefähr proportional zu der freien Querschnittsfläche ist. Nach dem Stand der Technik liegt diese freie Querschnittsfläche für jedes einzelne Element allerdings fest.

Vor Druckverbrauchern innerhalb des Extruders wie z.B. Rückförderelementen, Mischelementen, rückfördernden oder neutralen Knetblöcken und vor Druckverbrauchern außerhalb des Extruders wie z.B. Düsenplatten, Extrusionswerkzeugen und Schmelzefiltern entsteht innerhalb des Extruders eine Rückstauzone, in der vollgefüllt gefördert wird und in der der Druck zum Überwinden des Druckverbrauchers aufgebaut werden muss. Die Druckaufbauzone eines Extruders, in der der zum Austrag der Schmelze notwendige Druck erzeugt wird, wird als Austragszone bezeichnet. Die in die Polymerschmelze eingebrachte Energie spaltet sich,auf in Nutzleistung zum Druckaufbau und zum Fördern der Schmelze und in Dissipationsleistung, die sich nachteilig in einer Temperaturerhöhung der Schmelze bemerkbar macht. In der Druckaufbauzone erfolgt eine starke Rückströmung der Schmelze über die Schneckenkämme und dadurch ein erhöhter Energieeintrag [1]. In einer Druckaufbauzone sol lten daher Schneckenelemente verwendet werden, die möglichst wenig Energie dissipieren.

Nach dem Stand der Technik [1] (siehe z.B. Seite 101) liegt die Geometrie der exakt abschabenden Schneckenelemente durch Angabe der unabhängigen Größen Gangzahl $Z$, Achsabstand $A$ und Außenradius $RA$ fest. Der Kammwinkel, in dessen Bereich alle Punkte des Profils das Gehäuse abreinigen, ist nach dem Stand der Technik keine einstellbare und an die Aufgabenstellung anpassbare Größe, sondern ergibt sich für Elemente mit einem Kammbereich zu

$$KW0 = \frac{\pi}{Z} - 2\arccos\left(\frac{A}{2 \cdot RA}\right)$$

wobei $KW0$ der Kammwinkel des exakt abschabenden Profils im Bogenmaß und $\pi$ die Kreiszahl ($\pi \approx 3{,}14159$) ist.

Die Summe der Kammwinkel über beide Elemente eines dicht kämmenden Elementepaares $SKW0$ ergibt sich nach dem Stand der Technik [1] zwangsläufig zu:

$$SKW0 = 2\pi - 4Z\arccos\left(\frac{A}{2 \cdot RA}\right)$$

Schneckenprofile können mit einem oder mehreren Schneckengängen ausgeführt werden. Bekannte Schneckenprofile mit genau einem Schneckengang sind für gutes Fördervermögen und Steifigkeit beim Druckaufbau bekannt. Sie weisen einen sehr breiten Schneckenkamm auf, der mit engem Spalt das Schneckengehäuse abreinigt. Dem Fachmann ist bekannt, dass im Bereich der Schneckenkämme aufgrund des engen Spaltes besonders viel Energie in der Schmelze dissipiert wird, was lokal zu starken Überhitzungen im Produkt führt.

Dies ist beispielsweise in [1] auf den Seiten 160ff für ein zweigängiges Förderelement mit dem bekannten Erdmenger-Schneckenprofil dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führten. Vor allem ein großer Kammwinkel ist hierbei schädlich. Weiterhin begrenzt ein hoher Energieeintrag bei vielen Prozessen auch den möglichen Durchsatz des Doppelschneckenextruders und damit die Wirtschaftlichkeit.

In gleichläufigen Doppelschneckenextrudern nach dem Stand der Technik werden deshalb überwiegend zweigängige Schneckenprofile eingesetzt, die nur einen schmalen Schneckenkamm aufweisen. Diese sind jedoch erheblich weniger effektiv im Druckaufbau als die eingängigen Schneckenprofile. Dem Fachmann ist bekannt ([1], Seiten 129 bis 146), dass der Wirkungsgrad beim Druckaufbau zweigängiger Förderelemente mit dem bekannten Erdmenger-Schneckenprofil bei etwa 10% liegt. Ein Druckanstieg von 50 bar bei einer Dichte der Schmelze von 1000 kg/m$^3$ und einer Wärmekapazität der Schmelze von 2000 J/kg/K bei besagtem Wirkungsgrad von 10% führt zu einem Temperaturanstieg von 25 K ([1], Seite 120). Diese Erwärmung kann zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen.

Gleichsinnig drehende Doppelwellenextruder sind etablierter Stand der Technik für die Verarbeitung von thermoplastischen Polymeren. Für die Verarbeitung von Polymeren mit stark viskoelastischen Eigenschaften, wie z.B. Kautschuken, sind diese Maschinen hingegen noch nicht weit verbreitet. Das viskoelastische Verhalten führt zu besonderen Phänomenen und Problemstellungen:

Durch die elastischen Eigenschaften zeigen die Produkte feststoffähnliches Verhalten. Anstelle einer homogenen Schmelze befinden sich weiche elastische Partikel in den teilgefüllten Zonen der Schnecke.

Diese Partikel oder "Krümel" haben eine niedrige Schüttdichte, wodurch in offenen Schneckenzonen das Volumen der Schneckengänge oft nicht ausreicht und das Produkt die Öffnungen verstopft (z.B. Entgasungsöffnungen).

Die elastischen Eigenschaften bewirken eine Rückverformung, z.B. nach dem Durchgang durch einen Spalt zwischen Schnecke und Gehäuse bzw. im Zwickelbereich (ähnlich dem so genannten *"Die Swell"*-Verhalten an einer Düse). Dies führt zu teilweise großen Partikel in den teilgefüllten Schneckenzonen. Große Partikel sind ungünstig für diffusive Prozesse wie die Entgasung von flüchtigen Komponenten.

Die großen sich rückformenden Partikel neigen dazu, in offenen Schneckenzonen (z.B. Entgasungszonen) aus dem Schneckengang herauszuquellen und dadurch Verstopfungen zu verursachen.

Die elastischen Eigenschaften erschweren den Einzug der Partikel in den Schneckengang bzw. in einen Spalt - die Partikel neigen zum Ausweichen. Dadurch wird das Fördervermögen der Schnecke herabgesetzt.

Der behinderte Einzug der Partikel vermindert außerdem die Mischwirkung und die Oberflächenerneuerung in teilgefüllten Schneckenzonen, wodurch z.B. die Entgasungsleistung in einem Extruder herabgesetzt wird.

Mit den viskoelastischen Eigenschaften ist bei vielen gebräuchlichen Kautschuken eine hohe Viskosität verbunden, die zu einer hohen Energiedissipation und damit zur Überhitzung und Degradation des Materials führen kann.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führt. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Bei der Extrusion von Kautschukmischungen, die Vulkanisatoren wie z.B. Schwefel oder Peroxide enthalten, werden durch zu hohe Temperaturen zum vorzeitigen Vulkanisieren gebracht. Dies führt dazu, dass aus diesen Kautschukmischungen keine Produkte mehr hergestellt werden können.

Viskoelastische Massen stellen demnach besondere Anforderungen an die Extruder.

Moderne Doppelschneckenextruder verfügen über ein Baukastensystem, bei dem verschiedene bekannte Schneckenelemente auf einer Kernwelle aufgezogen werden können. Hiermit kann der Fachmann den Doppelschneckenextruder an die jeweilige Verfahrensaufgabe anpassen. Die nach dem Stand der Technik bekannten Schneckenelemente sind jedoch zum größten Teil nicht auf eine konkrete Aufgabe hin optimal gestaltet. Vielmehr liefern die Hersteller Schneckenelemente (Förder-, Knetund Mischelemente) aus einem festliegenden Baukastensystem unabhängig von einer konkreten Aufgabe.

Weitere Schneckenelemente werden in WO 0 209 919, WO 02 076 707, JP 58 017 825, WO 02 070 231, EP 1 013 402, WO 0 020 189 und WO 2 011 039 016 offenbart.

Um viskoelastische Produkte besser verarbeiten zu können, sind Anpassungen des Schneckenbesatzes erforderlich. Mit den marktgängigen Standard-Schneckenelementen lassen sich nicht alle Verfahrensaufgaben zufriedenstellend lösen.

Ausgehend vom bekannten Stand der Technik stellt sich demnach die Aufgabe, Schneckenelemente für gleichsinnig drehende Zwei- oder Mehrwellenmaschinen bereitzustellen, die eine effektive und effiziente Extrusion von viskoelastischen Massen ermöglichen. Die gesuchten Schneckenelemente sollen ein verbessertes Einzugsverhalten von viskoelastischen Massen in einen Extruder zeigen. Große Partikel in dem Extrusionsgut sollen durch die gesuchten Schneckenelemente vermieden werden. Die gesuchten Schneckenelemente sollen möglichst wenig Energie in das Extrusionsgut eintragen, um Schädigungen im Produkt zu vermeiden. Der verringerte Energieeintrag soll jedoch nicht auf Kosten eines geringeren Druckaufbaus erfolgen.

Erfindungsgemäß wird diese Aufgabe durch Schneckeilelemente gemäß den unabhängigen Ansprüchen gelöst. Bevorzugte Ausführungsformen finden sich in den abhängigen Ansprüchen.

Unter einem Profil eines Schneckenelements wird das Querschnittprofil in einer Ebene senkrecht zur Drehachse verstanden.

Die Bereiche eines Schneckenprofils, die gleich dem Schneckenaußenradius $RA$ sind, werden als Kammbereiche bezeichnet.

Der Winkel zwischen dem Anfangs- und dem Endpunkt eines Kammbereichs bezogen auf den Drehpunkt des Schneckenprofils wird als Kammwinkel bezeichnet.

Das Profil erfindungsgemäßer Schneckenelemente lässt sich durch eine Anordnung von Kreisbögen eindeutig beschreiben.

Bevorzugt setzen sich die Schneckenprofile erfindungsgemäßer Schneckenelemente im Querschnitt aus n Kreisbögen zusammen, wobei n eine ganze Zahl größer als 4 ist.

Die Position eines jeden Kreisbogens j (j=1 bis n) ist durch die Angabe von zwei verschiedenen Punkten eindeutig festlegbar. Zweckmäßigerweise wird die Position eines Kreisbogens durch Angabe des Mittelpunktes und des Anfangs- oder Endpunktes festgelegt. Die Größe eines einzelnen Kreisbogens j ist durch den Radius $R_j$ und den Winkel $\alpha_j$ um den Mittelpunkt zwischen Anfangs- und Endpunkt festgelegt, wobei der Radius $R_j$ größer oder gleich 0 und kleiner oder gleich dem Achsabstand $A$ zwischen den Wellen ist und der Winkel $\alpha_j$ im Bogenmaß größer oder gleich 0 und kleiner oder gleich $2\pi$ ist, wobei $\pi$ die Kreiszahl ($\pi \approx 3,14159$) ist.

Die Profile erfindungsgemäßer Schneckelemente können auch einen oder mehrere "Knicke" aufweisen. Ein Knick wird zweckmäßigerweise wie ein Kreisbogen mit einem Radius $R = 0$ behandelt. Die "Größe des Knicks" ist durch den entsprechenden Winkel des Kreisbogens mit dem Radius $R = 0$ gegeben, d.h. bei einem Knick erfolgt ein Übergang eines ersten Kreisbogens durch Drehung um den Winkel eines zweiten Kreisbogens mit Radius $R = 0$ in einen dritten Kreisbogen. Oder anders ausgedrückt: eine Tangente an den ersten Kreisbogen im Mittelpunkt des zweiten Kreisbogens mit dem Radius $R = 0$ schneidet eine Tangente an den dritten Kreisbogen ebenfalls im Mittelpunkt des zweiten Kreisbogens in einem Winkel, der dem Winkel des zweiten Kreisbogens entspricht. Unter Berücksichtigung des zweiten Kreisbogens gehen alle benachbarten Kreisbögen (erster → zweiter → dritter) tangential ineinander über. Zweckmäßigerweise wird ein Kreisbogen mit einem Radius $R = 0$ wie ein Kreisbogen behandelt, dessen Radius gleich eps ist, wobei eps eine sehr kleine positive reelle Zahl ist, die gegen 0 strebt (eps<<1, eps → 0).

Bei einem erfindungsgemäßen Profil gehen die Kreisbögen an ihren Anfangs- und Endpunkten stets tangential ineinander über.

In einem Doppelwellenextruder überlappen sich die Bohrungen im Querschnitt im so genannten Zwickelbereich. Die freie Fläche im Querschnitt einer Acht-Bohrung eines Doppelwellenextruders beträgt bekanntlich:

$$F_{acht} = r^2 \cdot (2\pi - gw + \sin(gw))$$

Dabei ist $r$ der Radius, $\pi$ die Kreiszahl und $gw$ der Gehäusewinkel $gw = 2 \cdot \arccos(A/DE)$.

Die Querschnittsfläche $F_{halb}$, die ein Element prinzipiell zur Verfügung hat, ist die Hälfte der gesamten Fläche

$$F_{halb} = F_{acht}/2$$

Wenn der Querschnitt eines erzeugenden Schneckenprofils die Fläche $F_1$ einnimmt, verbleibt eine freie Querschnittsfläche $F_1^{frei}$ von

$$F_1^{frei} = F_{halb} - F_1$$

Für die freie Querschnittsfläche $F_2^{frei}$ des benachbarten erzeugten Schneckenprofils gilt entsprechend: $F_2^{frei} = F_{halb} - F_2$

Je größer die freie Querschnittsfläche ist, desto größer ist das freie Volumen, das dem Extrusionsgut zur Verfügung steht, und umso größer ist das Fördervermögen des Extruders.

Gegenstand der vorliegenden Erfindung sind Schneckenelemente, die sich durch die folgende Kombination von Merkmalen auszeichnen:

- Das freie Volumen in einem Schneckengang ist gegenüber dem Stand der Technik erhöht, was sich bei einem offenen Gehäuse günstig auf die Entgasungseigenschaften auswirkt. Ebenso kann das bei erfindungsgemäßen asymmetrischen Schneckenprofilen auf einer Welle erhöhte Fördervermögen dort ausgenutzt werden, wo Seitenextruder angekoppelt werden.

- Die Summe der Kammwinkel eines Elementepaares ist kleiner als bei den aus dem Stand der Technik bekannten Schneckenelementen. Damit weisen erfindungsgemäße Schneckenelemente einen im Vergleich zum Stand der Technik geringeren Bereich auf, mit dem alle Punkte des Profils das Gehäuse abreinigen. Da in diesem Bereich besonders viel Energie in das Extrusionsgut eingetragen wird, kommt es durch die erfindungsgemäßen Schneckenelemente zu einer geringeren mechanischen und thermischen Belastung des Extrusionsguts, was sich sowohl auf die Produktqualität als auch auf die Wirtschaftlichkeit des Verfahrens auswirkt, denn durch die geringere Belastung ist es möglich, den Durchsatz zu steigern (siehe z.B. [1] Seite 60). Weiterhin sind die Einbußen beim Druckaufbau durch Verringerung des Kammwinkels im Vergleich zur Verminderung der thermischen Belastung gering, so dass eine höhere Effizienz beim Druckaufbau erzielt wird.

- Vorzugsweise schließ sich an den Kammbereich eines oder beider Profile eines Elementepaares ein so genannter Verjüngungsbereich an, der einen im Vergleich zum Stand der Technik langen, sich verjüngenden Kammspalt bewirkt. Der Verjüngungsbereich ist durch ein vergleichsweise geringes freies Volumen gekennzeichnet. Dieser Verjüngungsbereich führt zur Verminderung oder gar Vermeidung von großen Partikeln bei der Verarbeitung von viskoelastischen Materialien (Verringerung des "*Die-Swell*"-Effekts).

Die genannten Merkmale lassen sich bei den erfindungsgemäßen Schneckenelementen auf unterschiedliche Weisen realisieren. So ist es möglich, das große freie Volumen in einem offenen Schneckengang auf einer Welle zu realisieren, während der Verjüngungsbereich auf der benachbarten Welle realisiert wird. Derartige Schneckenelemente bilden einen ersten Gegenstand der vorliegenden Erfindung. Derartige Schneckenelemente werden im Folgenden auch als profilverschiedene Schneckenelemente bezeichnet.

Weiterhin ist es möglich, das große freie Volumen in einem offenen Schneckengang und den Verjüngungsbereich auf einer einzigen Welle zu realisieren. Derartige Schneckenelemente bilden einen zweiten Gegenstand der vorliegenden Erfindung. Derartige Schneckenelemente werden im Folgenden auch als profilidentische Schneckenelemente bezeichnet.

Von den erfindungsgemäßen profilverschiedenen Schneckenelementen lässt sich ein dritter Typ von Schneckenelementen ableiten, der ebenfalls Gegenstand der vorliegenden Erfindung ist. Schneckenelemente dieses Typs werden hier auch als offene Schneckenelemente bezeichnet.

Im Folgenden *ist A* der Achsabstand zwischen zwei Schneckenelementen, *DE* der Außendurchmesser der Schneckenelemente, *RA* der Außenradius der Schneckenelemente, *RI* der Innenradius der Schneckenelemente und π die Kreiszahl.

Profilverschiedene Schneckenelemente

Ein erster Gegenstand der vorliegenden Erfindung sind Schneckenelemente für mehrwellige Schneckenmaschinen mit paarweise gleichsinnig drehenden Schneckenwellen, dadurch gekennzeichnet, dass

- benachbarte Schneckenelemente ein ungleiches, unsymmetrisches Profil aufweisen,
- die Schneckenelemente jeweils über einen einzigen Kammbereich verfügen,
- die Summe *SKW* aller Kammwinkel eines Paares benachbarter Schneckenelemente größer als 0 und

kleiner als $2\pi - 4 \cdot \arccos\left(\dfrac{A}{DE}\right)$ ist,

- die freien Querschnittsflächen $F_1^{frei}$ und $F_2^{frei}$ von benachbarten Schneckenelementen in ihrer Größe voneinander abweichen.

Die erfindungsgemäßen profilverschiedenen Schneckenelemente, die auf benachbarten Wellen eingesetzt werden, haben ein unterschiedliches Profil, d.h. das erzeugende und erzeugte Schneckenprofil sind ungleich.

Weiterhin sind die Profile profilverschiedener Schneckenelemente unsymmetrisch, d.h. sie sind weder spiegelsymmetrisch noch punktsymmetrisch.

Die Summe der Winkel aller Kammwinkel des erzeugten und des erzeugenden Schneckenprofils profilverschiedener Schneckenelemente ist größer als 0 und

kleiner als $2\pi - 4 \cdot \arccos\left(\dfrac{A}{DE}\right)$, bevorzugt kleiner

als $0{,}8 \cdot \left(2\pi - 4 \cdot \arccos\left(\dfrac{A}{DE}\right)\right)$, besonders bevorzugt kleiner als $0{,}6 \cdot \left(2\pi - 4 \cdot \arccos\left(\dfrac{A}{DE}\right)\right)$, und am meisten bevorzugt kleiner als

$$0{,}4 \cdot \left(2\pi - 4 \cdot \arccos\left(\dfrac{A}{DE}\right)\right).$$

Damit weisen erfindungsgemäße profilverschiedene Schneckenelemente einen im Vergleich mit Schneckenelementen mit jeweils einem Kammbereich nach dem Stand der Technik geringeren Bereich auf, mit dem alle Punkte des Profils das Gehäuse abreinigen. Da in diesem Bereich besonders viel Energie in das Extrusionsgut eingetragen wird, kommt es durch die erfindungsgemäßen Schneckenelemente zu einer geringeren mechanischen und thermischen Belastung des Extrusionsguts, was sich sowohl auf die Produktqualität als auch auf die Wirtschaftlichkeit des Verfahrens auswirkt, denn durch die geringere Belastung ist es möglich, den Durchsatz zu steigern (siehe z.B. [1] Seite 60). Weiterhin sind die Einbußen beim Druckaufbau durch Verringerung des Kammwinkels im Vergleich zur Verminderung der thermischen Belastung gering, so dass eine höhere Effizienz beim Druckaufbau erzielt wird.

Das Verhältnis von Schneckenaußenradius *RA* zu Achsabstand A für die profilverschiedenen Schneckenelemente liegt bevorzugt im Bereich von 0,51 bis 0,7, besonders bevorzugt im Bereich von 0,52 bis 0,66 und ganz besonders bevorzugt im Bereich von 0,57 bis 0,63.

Die freien Querschnittsflächen $F_1^{frei}$ und $F_2^{frei}$ benachbarter Profile weichen bei den erfindungsgemäßen profilverschiedenen Schneckenelementen in ihrer Größe voneinander ab. Bevorzugt beträgt das Verhältnis der größeren Fläche zur kleineren Fläche mindestens 1,2, besonders mindestens 1,5 und ganz besonders bevorzugt mindestens 2.

Erfindungsgemäße Schneckenelemente zeichnen sich weiterhin dadurch aus, dass sich an den Kammbereich entweder des erzeugenden oder des erzeugten Schneckenprofils auf einer Seite ein Bereich anschließt, der als "Verjüngungsbereich" bezeichnet wird.

Der Verjüngungsbereich umfasst einen oder mehrere Kreisbögen, wobei alle auf den Kreisbögen des Verjüngungsbereichs liegenden Punkte einen Abstand vom Drehpunkt aufweisen, der zwischen (*RA*+*RI*)/2 und *RA* liegt. Der Verjüngungsbereich erstreckt sich über einen Winkel, bezogen auf den Drehpunkt des Profils, der größer als 90° ist. Bevorzugt erstreckt sich der Verjüngungsbereich über einen Winkel größer als 120°, besonders bevorzugt größer als 180°.

Durch den sich an den Kammbereich anschließenden Verjüngungsbereich entsteht ein langer sich verjüngender Kammspalt, der zur Verminderung oder gar Vermeidung von großen Partikeln bei der Verarbeitung von viskoelastischen Materialien führt (Verringerung des "*Die-Swell*"-Effekts).

Durch den im Vergleich zum Stand der Technik großen Verjüngungsbereich ergibt sich in dem Profil des benachbarten Schneckenelements ein im Vergleich zum Stand der Technik höheres freies Volumen in einem offenen Schneckengang, was sich günstig auf die Entgasungseigenschaften auswirkt.

Profilidentische Schneckenelemente (nicht ein Gegenstand der Erfindung)

Schneckenelemente für mehrwellige Schneckenmaschinen mit paarweise gleichsinnig drehenden Schneckenwellen werden dadurch gekennzeichnet, dass

- benachbarte Schneckenelemente ein identisches, unsymmetrisches Profil aufweisen,
- das Profil einen einzigen Kammbereich mit einem Kammwinkel kleiner als $\pi - 2\arccos\left(\dfrac{A}{2 \cdot RA}\right)$ umfasst, und
- sich in dem Profil an den Kammbereich auf einer Seite ein Bereich anschließt, der als Verjüngungsbereich bezeichnet wird.

Der Verjüngungsbereich umfasst einen oder mehrere Kreisbögen, wobei alle auf den Kreisbögen liegenden Punkte einen Abstand vom Drehpunkt haben, der zwischen (*RA*+*RI*)/2 und *RA* liegt. Da das erzeugende und das erzeugte Schneckenprofil identisch sind, liegen Verjüngungsbereiche bei beiden benachbarten Schneckenelementen vor. Der Verjüngungsbereich erstreckt sich über einen Winkel, bezogen auf den Drehpunkt des Profils, der größer als 30° bevorzugt größer als 45° und besonders bevorzugt größer als 90° ist.

Durch den sich an den Kammbereich anschließenden Verjüngungsbereich entsteht ein langer sich verjüngender Kammspalt, der zur Verminderung oder gar Vermeidung von großen Partikeln bei der Verarbeitung von viskoelastischen Materialien führt (Verringerung des "*Die-Swell*"-Effekts).

Die erfindungsgemäßen profilidentischen Schneckenelemente, die auf benachbarten Wellen eingesetzt werden, haben ein identisches Profil, d.h. das erzeugende und erzeugte Schneckenprofil sind gleich.

Durch die Identität von erzeugendem und erzeugtem Schneckenprofil in Kombination mit dem im Vergleich zum Stand der Technik großen Verjüngungsbereich ergibt sich auf der dem Verjüngungsbereich gegenüberliegenden Seite der Schneckenelemente ein im Vergleich zum Stand der Technik höheres freies Volumen in einem offenen Schneckengang, was sich günstig auf die Förder- und Entgasungseigenschaften auswirkt.

Weiterhin ist das Profil profilidentischer Schneckenelemente unsymmetrisch, d.h. es ist weder ach-sensymmetrisch noch punktsymmetrisch.

Erfindungsgemäße profilidentische Schneckenelemente weisen einen einzigen Kammbereich auf.

Erfindungsgemäße profilidentische Schneckenelemente weisen einen Kammwinkel von weniger

als $\pi - 2\arccos\left(\dfrac{A}{2 \cdot RA}\right)$, bevorzugt weniger als

$0,8 \cdot (\pi - 2\arccos\left(\dfrac{A}{2 \cdot RA}\right))$, besonders bevorzugt

weniger als $0,6 \cdot (\pi - 2\arccos\left(\dfrac{A}{2 \cdot RA}\right))$, ganz besonders bevorzugt weniger als

$0,5 \cdot (\pi - 2\arccos\left(\dfrac{A}{2 \cdot RA}\right))$ auf.

Der Kammwinkel

$KW0 = \pi - 2\arccos\left(\dfrac{A}{2 \cdot RA}\right)$ entspricht dem Kammwinkel eines eingängigen Schneckenelements vom Typ Erdmenger. Damit weisen erfindungsgemäße Schneckenelemente einen im Vergleich zum Stand der Technik geringeren Bereich auf, mit dem alle Punkte des Profils das Gehäuse abreinigen. Da in diesem Bereich besonders viel Energie in das Extrusionsgut eingetragen wird, kommt es durch die erfindungsgemäßen Schneckenelemente zu einer geringeren mechanischen und thermischen Belastung des Extrusionsgut, was sich sowohl auf die Produktqualität als auch auf die Wirtschaftlichkeit des Verfahrens auswirkt, denn durch die geringere Belastung ist es möglich, den Durchsatz zu steigern (siehe z.B. [1] Seite 60). Weiterhin sind die Einbußen beim Druckaufbau durch Verringerung des Kammwinkels im Vergleich zur Verminderung der thermischen Belastung gering, so dass eine höhere Effizienz beim Druckaufbau erzielt wird.

Das Verhältnis von Schneckenaußenradius *RA* zu Achsabstand A für die profilidentischen Schneckenelemente liegt bevorzugt im Bereich von 0,51 bis 0,7, besonders bevorzugt im Bereich von 0,52 bis 0,66 und ganz besonders bevorzugt im Bereich von 0,57 bis 0,63.

Offene Schneckenelemente

Ein dritter Gegenstand der vorliegenden Erfindung sind Schneckenelemente für mehrwellige Schneckenmaschinen mit paarweise gleichsinnig drehenden Schneckenwellen, dadurch gekennzeichnet, dass

- benachbarte Schneckenelemente ein ungleiches Profil aufweisen,
- ein Profil genau einen Kammbereich und das benachbarte Profil genau zwei Kammbereiche aufweist,
- die freien Querschnittsflächen $F_1^{frei}$ und $F_2^{frei}$ benachbarter Profile in ihrer Größe voneinander abweichen.

Die erfindungsgemäßen offenen Schneckenelemente, die auf benachbarten Wellen eingesetzt werden, haben zwangsläufig ein unterschiedliches Profil, d.h. das erzeugende und erzeugte Schneckenprofil sind ungleich.

Die Profile offener Schneckenelemente können jeweils symmetrisch oder unsymmetrisch sein. Bevorzugt sind die Profile erzeugender und erzeugter Schneckenelemente spiegelsymmetrisch; sie weisen vorzugsweise jeweils eine Spiegelebene auf, in der die jeweilige Drehachse liegt.

Die freien Querschnittsflächen $F_1^{frei}$ und $F_2^{frei}$ benachbarter Schneckenelemente weichen bei den erfindungsgemäßen offenen Schneckenelementen in ihrer Größe voneinander ab. Bevorzugt beträgt das Verhältnis der größeren Fläche zur kleineren Fläche mindestens 1,2, besonders mindestens 1,4 und ganz besonders bevorzugt mindestens 1,6.

Ein Profil eines Elementes eines erfindungsgemäßen offenen Schneckenelementepaares weist genau einen Kammbereich und das andere Profil genau zwei Kammbereiche auf.

Die erfindungsgemäße offenen Schneckenelemente weisen einen im Vergleich zum Stand der Technik geringeren Bereich auf, mit dem alle Punkte des Profils das Gehäuse abreinigen. Da in diesem Bereich besonders viel Energie in das Extrusionsgut eingetragen wird, kommt es durch die erfindungsgemäßen Schneckenelemente zu einer geringeren mechanischen und thermischen Belastung des Extrusionsgut, was sich sowohl auf die Produktqualität als auch auf die Wirtschaftlichkeit des Verfahrens auswirkt, denn durch die geringere Belastung ist es möglich, den Durchsatz zu steigern (siehe z.B. [1] Seite 60). Weiterhin sind die Einbußen beim Druckaufbau durch Verringerung des Kammwinkels im Vergleich zur Verminderung der thermischen Belastung gering, so dass eine höhere Effizienz beim Druckaufbau erzielt wird.

Das Profil eines erfindungsgemäßen Elementepaares, das genau einen Kammbereich aufweist, ist durch ein im Vergleich zum Stand der Technik großes freies Volumen gekennzeichnet, das sich günstig auf die Entgasungs- und Fördereigenschaften auswirkt.

Das Verhältnis von Schneckenaußenradius *RA* zu Achsabstand A für die profilidentischen Schneckenelemente liegt bevorzugt im Bereich von 0,51 bis 0,7, besonders bevorzugt im Bereich von 0,52 bis 0,66 und ganz besonders bevorzugt im Bereich von 0,57 bis 0,63.

Profilverschiedene, profilidentische und offene Schneckenelemente

Alle erfindungsgemäßen Schneckenelemente können als Förderelemente oder Knetelemente oder Mischelemente ausgebildet sein.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Je nach Drehrichtung der Wellen wird das Förderelement rechts- oder linksgängig ausgeführt. Rückfördernde Elemente erhält man jeweils durch eine dazu entgegengesetzte Verdrehung. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Schneckendurchmessers.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Schneckendurchmessers.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet ist.

Die Profile erfindungsgemäßer Schneckenelemente basieren auf exakt abschabend Profilen. Dem Fachmann ist bekannt, dass exakt abschabende Schneckenprofile nicht direkt in einen Schneckenextruder eingesetzt werden können. Vielmehr sind Spiele zwischen den Schnecken erforderlich. Hierfür sind in [1] auf den Seiten 28 ff verschiedene Strategien beschrieben. Für die Schneckenprofile erfindungsgemäßer Schneckenelemente können Spiele im Bereich von 0,001 bis 0,1 bezogen auf den Durchmesser des Schneckenprofils verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder in den angegebenen Grenzen variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Das Profil erfindungsgemäßer Schneckenelemente lässt sich nach einem der in PCT/EP2009/003549 beschriebenen Verfahren konstruieren.

Wie oben beschrieben, lässt sich das Profil erfindungsgemäßer Schneckenelemente durch Kreisbögen beschreiben. Zur Erzeugung erfindungsgemäßer Schneckenelemente werden daher Kreisbögen so zusammengesetzt, dass sie ein konvexes Profil ergeben und jeweils an ihren Anfangs- und Endpunkten tangential ineinander übergehen.

Dabei kann das Profil einen oder mehrere "Knicke" aufweisen. An einem Knick gehen die benachbarten Kreisbögen tangential ineinander über, wenn der Knick wie ein Kreisbögen mit einem Radius gleich 0 behandelt wird (siehe oben).

Weiterhin ist zu berücksichtigen, dass jeweils ein Kreisbogen des erzeugenden Schneckenprofils mit einem Kreisbogen des erzeugten Schneckenprofils "korrespondiert", wobei unter "korrespondieren" verstanden wird, dass

- die Winkel von korrespondierenden Kreisbögen gleich groß sind,
- die Summe der Radien korrespondierender Kreisbögen gleich dem Achsabstand A ist,
- je eine der Verbindungslinien zwischen dem Mittelpunkt eines Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,
- die Richtungen, in denen die Endpunkte eines Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,

• der Mittelpunkt eines Kreisbogens des erzeugenden Schneckenprofils einen Abstand zum Mittelpunkt eines korrespondierenden Kreisbogens des erzeugten Schneckenprofils hat, der dem Achsabstand entspricht,

• die Verbindungslinie zwischen dem Mittelpunkt eines Kreisbogens des erzeugenden Schneckenprofils und dem Mittelpunkt des korrespondierenden Kreisbogens erzeugten Schneckenprofils parallel zu der Verbindungslinie zwischen dem Drehpunkt des erzeugenden Schneckenprofils und dem Drehpunkt des erzeugten Schneckenprofils ist,

• die Richtung, in die der Mittelpunkt eines Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden muss, um mit dem Drehpunkt des erzeugten Schneckenprofils zur Deckung gebracht zu werden.

Die Profile erfindungsgemäßer Schneckenelemente sind dadurch charakterisiert, dass sie allein mit Winkellineal und Zirkel konstruiert werden können. So wird der tangentiale Übergang zwischen dem j-ten und dem (j+1)-ten Kreisbogen des erzeugenden Schneckenprofils konstruiert, indem um den Endpunkt des j-ten Kreisbogens ein Kreis mit dem Radius $R_{j+1}$ geschlagen wird und der näher zum Drehpunkt des erzeugenden Schneckenprofils gelegene Schnittpunkt dieses Kreises mit der Gerade, die durch den Mittelpunkt und den Endpunkt des j-ten Kreisbogens definiert ist, der Mittelpunkt des (j+1)-ten Kreisbogens ist.

Es empfiehlt sich, das Verfahren zur Erzeugung von erfindungsgemäßen Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können.

Nachdem sie bevorzugt am Computer unter Berücksichtigung der oben genannten Konstruktionsmerkmale konstruiert worden sind, können die erfindungsgemäßen Schneckenelemente z.B. mit einer Fräsmaschine erzeugt werden. Bevorzugte Materialien zur Erzeugung der Schneckenelemente sind Stähle, insbesondere Nitrierstähle, Chrom-, Werkzeug- und Edelstähle, sowie pulvermetallurgisch hergestellte metallische Verbundwerkstoffe auf Basis von Eisen, Nickel oder Kobalt.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet-, Mischoder Förderelementen vorliegen. Es ist ebenso möglich, Knet-, Förder-, und Mischelemente in einer Scheckenmaschine miteinander zu kombinieren. Die erfindungsgemäßen Schneckenelemente können auch mit anderen Schneckenelementen, die z.B. nach dem Stand der Technik bekannt sind, kombiniert werden.

Die erfindungsgemäßen Schneckenelemente eignen sich zur Extrusion plastischer und viskoelastischer Massen, z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Unter einer plastischen Masse wird eine verformbare Masse verstanden. Beispiele für plastische Massen sind Polymerschmelzen, vor allem von Thermoplasten, sowie Elastomere, Mischungen von Polymerschmelzen oder Dispersionen von Polymerschmelzen mit Feststoffen, Flüssigkeiten oder Gasen.

Bevorzugt werden thermoplastische Polymere oder Gemische von Polymeren aus der folgenden Reihe eingesetzt: Polycarbonat, Polyamid, Polyester, insbesondere Polybutylenterephthalat und Polyethylenterephthalat, sowie Polyether, thermoplastisches Polyurethan, Polyacetal, Fluorpolymer, insbesondere Polyvinylidenfluorid, sowie Polyethersulfone, Polyolefin, insbesondere Polyethylen und Polypropylen, sowie Polyimid, Polyacrylat, insbesondere Poly(methyl)methacrylat, sowie Polyphenylenoxid, Polyphenylensulfid, Polyetherketon, Polyaryletherketon, Styrolpolymerisate, insbesondere Polystyrol und Styrolcopolymere, insbesondere Styrolacrylnitrilcopolymer und Acrylnitrilbutadienstyrolblockcopolymere sowie Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Unter viskoelastischen Massen werden solchen Materialien und Mischungen verstanden, die eine zeit-, temperatur- und frequenzabhängige Elastizität aufweisen. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut.

Beispiele für viskoelastische Materialien sind Styrol-Butadien-Kautschuk, Naturkautschuk, Butatdien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Die zu extrudierenden plastischen oder viskoelastischen Polymere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

Additive können als Feststoffe, Flüssigkeiten oder Lösungen gemeinsam mit dem Polymer in den Extruders gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidantien wirksame Benzofurane und Indolinone, Formtrennmittel, flammhemmende Additive, antistatische Mittel, Färbemittel und Schmelzestabilisatoren sein. Beispielhaft für Füll- und Verstärkungsstoffe sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die erfindungsgemäßen Schneckenelemente eigen sich wie oben ausgeführt besonders zur Extrusion viskoelastischer Massen. Gegenstand der vorliegenden Erfindung ist daher weiterhin ein Verfahren zur Extrusion viskoelastischer Massen in einem Doppelschnecken- oder Mehrwellenextruder unter Verwendung von erfindungsgemäßen Schneckenelementen.

Die Erfindung wird nachstehend anhand der Figuren beispielhaft näher erläutert, ohne sie jedoch auf diese zu beschränken. Alle Figuren wurden mit Hilfe eines Computerprogramms erzeugt.

Sinnvollerweise arbeitet man mit dimensionslosen Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand $A$ an, da diese Größe an einem Extruder nicht verändert werden kann.

In den Figuren wird die folgende Nomenklatur verwendet:

- Alle Größenangaben sind auf den Achsabstand $A$ normiert. Die normierten Größen werden mit Großbuchstaben bezeichnet.
- Winkel werden im Bogenmaß angegeben.
- Die Profile des erzeugenden und des erzeugten Schneckenelements werden durch Kreisbögen beschrieben. Die Kreisbögen sind jeweils durchnummeriert: die Kreisbögen des erzeugenden Profils tragen die Nummern 1, 2, 3 usw., die Kreisbögen des benachbarten erzeugten Profils tragen die Nummern 1', 2', 3' usw.

- $M_x$ und $M_y$ sind die x- und y-Koordinaten des Kreismittelpunkts eines profilerzeugenden Kreisbogens in einem kartesischen Koordinatensystem, dessen Ursprung sich im Drehpunkt des jeweiligen Schneckenprofils befindet.
- $R$ ist der auf den Achsabstand $A$ normierte Radius und $\alpha$ der Bogenwinkel des Kreisbogens.
- $RA$ ist der auf den Achsabstand $A$ normierte Außenradius der Schneckenelemente.

Alle Figuren weisen den gleichen Aufbau auf, der nachfolgend beschrieben wird. Das erzeugende Schneckenprofil wird durch das linke Schneckenprofil dargestellt. Das erzeugte Schneckenprofil wird durch das rechte Schneckenprofil dargestellt. Die Kreisbögen des erzeugenden und des erzeugten Schneckenprofils sind durch dicke, durchgezogene Linien gekennzeichnet, die mit den jeweiligen Nummern der Kreisbögen versehen sind. Bedingt durch die Vielzahl der Kreisbögen und bedingt durch die Erzeugung der Figuren mittels eines Computerprogramms kann es vorkommen, dass sich die Nummern einzelner Kreisbögen überlappen und daher schlecht lesbar sind. Trotz der teilweisen schlechten Lesbarkeit einzelner Nummern, wird der Aufbau der Profile aus dem Zusammenhang in Verbindung mit der vorliegenden Beschreibung dennoch deutlich.

Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der Schneckenaußenradius ist jeweils für das erzeugende und das erzeugte Schneckenprofil gleich groß bzw. annähernd gleich groß. Im Bereich des Schneckengehäuses ist der Schneckenaußenradius durch eine dünne, gestrichelte Linie gekennzeichnet, im Zwickelbereich durch eine dünne, gepunktete Linie.

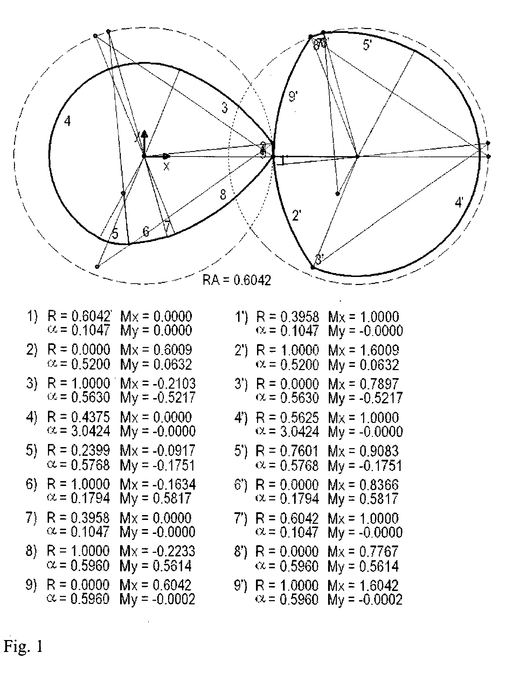

**Fig. 1** zeigt die Querschnittsprofile eines Paars erfindungsgemäßer profilverschiedener Schneckenelemente. Das erzeugende und das erzeugte Profil setzen sich jeweils aus 9 Kreisbögen zusammen.

Unterhalb der Figur 1 sind die Koordinaten der Mittelpunkte der jeweiligen Kreisbögen, ihre Radien und die Winkel der jeweiligen Kreisbögen angegeben. Die Kreisbögen 1 und 1', 2 und 2', 3 und 3' usw. korrespondieren jeweils miteinander.

Die Profile der benachbarten Elemente sind verschieden. Die Profile sind nicht symmetrisch. Auf der linken Seite liegt eine große freie Querschnittsfläche vor; auf der rechten Seite ein sich über die Kreisbögen 5', 4' und 3' erstreckender Verjüngungsbereich.

Die freien Querschnittsflächen benachbarter Elemente sind verschieden. Im vorliegenden Beispiel gilt:

$$F_{halb} = F_{acht} / 2 = 2531{,}5$$

$$F_1 = 1482{,}5$$

$$F_2 = 2010{,}5$$

$$F_1^{frei} = 1048{,}7$$

$$F_2^{frei} = 521{,}0$$

$$\frac{F_1^{frei}}{F_2^{frei}} = 2{,}01$$

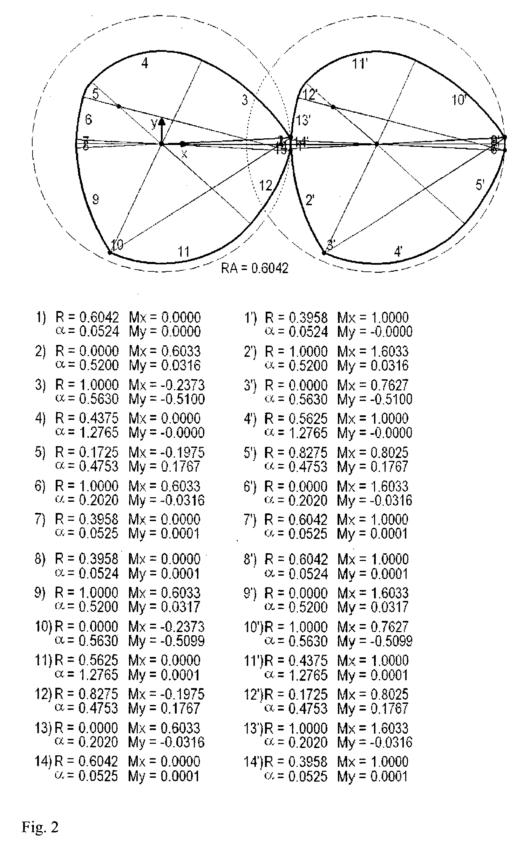

**Fig. 2** zeigt die Querschnittsprofile eines Paars erfindungsgemäßer profilidentischer Schneckenelemente. Das erzeugende und das erzeugte Profil setzen sich jeweils aus 14 Kreisbögen zusammen. Unterhalb der Figur 2 sind die Koordinaten der Mittelpunkte der jeweiligen Kreisbögen, ihre Radien und die Winkel der jeweiligen Kreisbögen angegeben. Die Kreisbögen 1 und 1', 2 und 2', 3 und 3' usw. korrespondieren jeweils miteinander.

Die Profile der benachbarten Elemente sind identisch. Die Profile sind nicht symmetrisch. Jedes Profil weist einen großen Verjüngungsbereich (Kreisbögen 12, 11 und 10 bzw. 5', 4' und 3') und auf der gegenüberliegenden Seite des Profils eine große freie Querschnittsfläche auf.

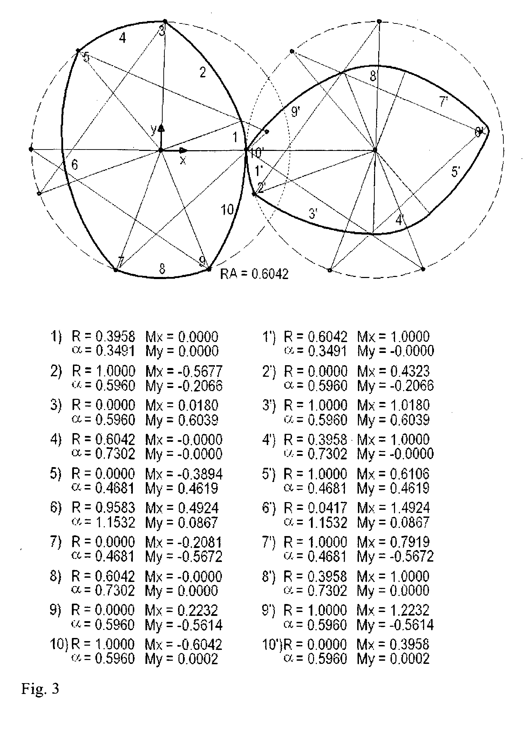

**Fig. 3** zeigt die Querschnittsprofile eines Paars erfindungsgemäßer offener Schneckenelemente. Das erzeugende und das erzeugte Profil setzen sich jeweils aus 10 Kreisbögen zusammen. Unterhalb der Figur 3 sind die Koordinaten der Mittelpunkte der jeweiligen Kreisbögen, ihre Radien und die Winkel der jeweiligen Kreisbögen angegeben. Die Kreisbögen 1 und 1', 2 und 2', 3 und 3' usw. korrespondieren jeweils miteinander.

Die Profile der benachbarten Elemente sind verschieden. Die Profile sind jeweils symmetrisch, sie weisen eine Spiegelebene auf. Das erzeugende linke Profil weist genau zwei Kammbereiche auf (Kreisbögen 3, 4 und 5; Kreisbögen 7, 8 und 9); das erzeugte rechte Profil weist genau einen Kammbereich auf (Kreisbögen 2', 1' und 10').

Die freien Querschnittsflächen benachbarter Elemente sind verschieden. Im vorliegenden Beispiel gilt:

$$F_{halb} = F_{acht} / 2 = 2531{,}5$$

$$F_1 = 1887{,}1$$

$$F_2 = 1481{,}1$$

$$F_1^{frei} = 644{,}4$$

$$F_2^{frei} = 1050{,}4$$

$$\frac{F_2^{frei}}{F_1^{frei}} = 1{,}63$$

**Patentansprüche**

1. Schneckenelemente für paarweise gleichsinnig drehende Schneckenwellen für mehrwellige Schneckenmaschinen, wobei die Schneckenelemente, die auf den paarweise benachbarten Schneckenwellen paarweise gegenüberliegen, paarweise exakt abschabend sind, **dadurch gekennzeichnet, dass**

   - Schneckenelemente, die auf den paarweise benachbarten Schneckenwellen paarweise gegenüberliegen, ein ungleiches, unsymmetrisches Profil aufweisen,
   - die Schneckenelemente jeweils über einen einzigen Kammbereich verfügen,
   - die Summe *SKW* aller Kammwinkel eines benachbarten Schneckenelementepaars größer als 0 und kleiner als $2\pi - 4 \cdot \arccos\left(\dfrac{A}{DE}\right)$

   ist,
   - die freien Querschnittsflächen $F_1^{frei}$ und $F_2^{frei}$ der Profile von benachbarten Schneckenelementen in ihrer Größe voneinander abweichen.

2. Schneckenelemente nach Anspruch 1, **dadurch ge-**

**kennzeichnet, dass** die Summe *SKW* der Kammwinkel des erzeugten und des erzeugenden Schneckenprofils kleiner als

$$0,8 \cdot ( 2\pi - 4 \cdot \arccos\left(\frac{A}{DE}\right)),\text{ bevorzugt klei-}$$

ner als $0,6 \cdot ( 2\pi - 4 \cdot \arccos\left(\frac{A}{DE}\right))$, besonders

bevorzugt kleiner als

$$0,4 \cdot ( 2\pi - 4 \cdot \arccos\left(\frac{A}{DE}\right)) \text{ ist.}$$

3.  Schneckenelemente nach einem der Ansprüche 1 oder 2, **dadurch gekennzeichnet, dass** das Verhältnis der größeren freien Querschnittsfläche zur kleineren freien Querschnittsfläche benachbarter Profile mindestens 1,5, besonders bevorzugt mindestens 2 beträgt.

4.  Schneckenelemente nach einem der Ansprüche 1 bis 3, **dadurch gekennzeichnet, dass** das Profil eines Elements eines Elementepaares über einen Verjüngungsbereich verfügt, der sich über einen Winkel, bezogen auf den Drehpunkt des Profils, erstreckt, der größer als 90°, bevorzugt größer als 120°, besonders bevorzugt größer als 180° ist, wobei der Verjüngungsbereich einen oder mehrere Kreisbögen umfasst, und alle auf den Kreisbögen des Verjüngungsbereichs liegenden Punkte einen Abstand zwischen (*RA+RI*)/2 und *RA* zum Drehpunkt des Profils aufweisen, wobei *RA* der Schneckenaußenradius und *RI* der Schneckeninnenradius ist.

5.  Schneckenelemente für paarweise gleichsinnig drehende Schneckenwellen für mehrwellige Schneckenmaschinen, wobei die Schneckenelemente, die auf den paarweise benachbarten Schneckenwellen paarweise gegenüberliegen, paarweise exakt abschabend sind, **dadurch gekennzeichnet, dass-**

    - Schneckenelemente, die auf den paarweise benachbarten Schneckenwellen paarweise gegenüberliegen, ein ungleiches Profil aufweisen,
    - bei einem benachbarten Elementepaar ein Profil genau einen Kammbereich und das benachbarte Profil genau zwei Kammbereiche aufweist,
    - die freien Querschnittsflächen $F_1^{frei}$ und

    $F_2^{frei}$ benachbarter Profile in ihrer Größe voneinander abweichen.

6.  Schneckenelemente nach Anspruch 5, **dadurch ge-**

**kennzeichnet, dass** das Verhältnis der größeren freien Querschnittsfläche zur kleineren freien Querschnittsfläche benachbarter Profile mindestens 1,2, besonders bevorzugt mindestens 1,4 und ganz besonders bevorzugt mindestens 1,6 beträgt.

7.  Schneckenelemente nach einem der Ansprüche 5 oder 6, **dadurch gekennzeichnet, dass** die Profile jeweils spiegelsymmetrisch sind.

8.  Schneckenelemente nach einem der Ansprüche 1 bis 7, **dadurch gekennzeichnet, dass** das Verhältnis von Schneckenaußenradius *RA* zu Achsabstand A bevorzugt im Bereich von 0,51 bis 0,7, besonders bevorzugt im Bereich von 0,52 bis 0,66 und ganz besonders bevorzugt im Bereich von 0,57 bis 0,63 liegt.

9.  Schneckenelemente nach einem der Ansprüche 1 bis 8, **dadurch gekennzeichnet, dass** sich das Profil der Schneckenelemente nur aus Kreisbögen zusammensetzt.

10. Schneckenelemente nach einem der Ansprüche 1 bis 9, die von exakt abschabenden Profilen durch abgeleitet sind, dass sie Spiele zwischen Schneckenelementen und Gehäuse und/oder zwischen benachbarten Schneckenelementen aufweisen.

11. Verwendung von Schneckenelementen nach einem der Ansprüche 1 bis 10 in einer Mehrwellenschneckenmaschine, bevorzugt in einer Zweiwellenschneckenmaschine.

12. Verfahren zur Extrusion viskoelastischer Massen in einem Doppelschnecken- oder Mehrwellenextruder unter Verwendung der erfindungsgemäßen Schneckenelemente nach einem der Ansprüche 1 bis 10.

13. Mehrwellige Schneckenmaschinen mit paarweise gleichsinnig drehenden Schneckenwellen mit Schneckenelementen, wobei Schneckenelemente, die auf paarweise benachbarten Schneckenwellen paarweise gegenüberliegen, paarweise exakt abschabend sind, **dadurch gekennzeichnet, dass**

    - Schneckenelement nach Anspruch 1 eingesetzt werden.

14. Mehrwellige Schneckenmaschinen mit paarweise gleichsinnig drehenden Schneckenwellen mit Schneckenelementen, wobei Schneckenelemente, die auf paarweise benachbarten Schneckenwellen paarweise gegenüberliegen, paarweise exakt abschabend sind, **dadurch gekennzeichnet, dass**

    - Schneckenelemente nach Anspruch 5 eingesetzt werden

**Claims**

1. Screw elements for paired co-directionally rotating screw shafts for multi-shaft screw machines, the screw elements that lie opposite in pairs on the paired adjacent screw shafts being fully wiping in pairs, **characterized in that**

  - screw elements that lie opposite in pairs on the paired adjacent screw shafts have an unlike, unsymmetrical profile,
  - the screw elements have in each case a single flight land region,
  - the sum *SKW* of all the flight land angles of an adjacent pair of screw elements is greater than 0 and less than $2\pi - 4 \cdot \arccos\left(\dfrac{A}{DE}\right)$,
  - the free cross-sectional areas $F_1^{frei}$ and $F_2^{frei}$ of the profiles of adjacent screw elements differ from each other in their size.

2. Screw elements according to Claim 1, **characterized in that** the sum *SKW* of the flight land angles of the generated screw profile and the generating screw profile is less than $0.8 \cdot \left(2\pi - 4 \cdot \arccos\left(\dfrac{A}{DE}\right)\right)$, preferably less than $0.6 \cdot \left(2\pi - 4 \cdot \arccos\left(\dfrac{A}{DE}\right)\right)$, particularly preferably less than $0.4 \cdot \left(2\pi - 4 \cdot \arccos\left(\dfrac{A}{DE}\right)\right)$.

3. Screw elements according to either of Claims 1 and 2, **characterized in that** the ratio of the larger free cross-sectional area to the smaller free cross-sectional area of adjacent profiles is at least 1.5, particularly preferably at least 2.

4. Screw elements according to one of Claims 1 to 3, **characterized in that** the profile of one element of a pair of elements has a tapering region which extends over an angle, with respect to the point of rotation of the profile, which is greater than 90°, preferably greater than 120°, particularly preferably greater than 180°, the tapering region comprising one or more circular arcs, and all of the points that lie on the arcs of the tapering region have a distance from the point of rotation of the profile that lies between (*RA*+*RI*)/2 and *RA*, *RA* being the outer screw radius and *RI* the inner screw radius.

5. Screw elements for paired co-directionally rotating screw shafts for multi-shaft screw machines, the screw elements that lie opposite in pairs on the paired adjacent screw shafts being fully wiping in pairs, **characterized in that**

  - screw elements that lie opposite in pairs on the paired adjacent screw shafts have an unlike profile,
  - in the case of an adjacent pair of elements, one profile has just one flight land region and the adjacent profile has just two flight land regions,
  - the free cross-sectional areas $F_1^{frei}$ and $F_2^{frei}$ of adjacent profiles differ from each other in their size.

6. Screw elements according to Claim 5, **characterized in that** the ratio of the larger free cross-sectional area to the smaller free cross-sectional area of adjacent profiles is at least 1.2, particularly preferably at least 1.4 and most particularly preferably at least 1.6.

7. Screw elements according to either of Claims 5 and 6, **characterized in that** the profiles are in each case mirror-symmetrical.

8. Screw elements according to one of Claims 1 to 7, **characterized in that** the ratio of the outer screw radius *RA* to the centreline distance A preferably lies in the range from 0.51 to 0.7, particularly preferably in the range from 0.52 to 0.66 and most particularly preferably in a range from 0.57 to 0.63.

9. Screw elements according to one of Claims 1 to 8, **characterized in that** the profile of the screw elements is only composed of circular arcs.

10. Screw elements according to one of Claims 1 to 9, which are derived from fully wiping profiles by having clearances between the screw elements and the barrel and/or between adjacent screw elements.

11. Use of screw elements according to one of Claims 1 to 10 in a multi-shaft screw machine, preferably in a twin-shaft screw machine.

12. Process for the extrusion of viscoelastic compositions in a twin-screw or multi-shaft extruder using the screw elements according to the invention as provided by one of Claims 1 to 10.

13. Multi-shaft screw machines with paired co-directionally rotating screw shafts with screw elements, screw elements that lie opposite in pairs on the paired adjacent screw shafts being fully wiping in pairs, **characterized in that** screw elements according to Claim 2 are used.

14. Multi-shaft screw machines with paired co-directionally rotating screw shafts with screw elements, screw elements that lie opposite in pairs on the paired adjacent screw shafts being fully wiping in pairs, **char-**

**acterized in that** screw elements according to Claim 5 are used.

## Revendications

1. Eléments de vis sans fin pour des arbres de vis sans fin tournant par paires dans le même sens pour des machines à vis sans fin à plusieurs arbres, dans lesquels les éléments de vis sans fin, qui sont opposés par paires sur les arbres de vis sans fin voisins par paires, sont en situation de raclage exact par paires, **caractérisés en ce que**

   - des éléments de vis sans fin, qui sont opposés par paires sur des arbres de vis sans fin voisins par paires, présentent un profil dissemblable, dissymétrique,
   - les éléments de vis sans fin sont respectivement dotés d'une unique zone d'engrènement,
   - la somme $SKW$ de tous les angles d'engrènement d'une paire d'éléments de vis sans fin voisins est plus grande que 0 et plus petite que

   $$2\pi - 4 \cdot \arccos\left(\frac{A}{DE}\right),$$

   - les surfaces de section transversale libres $F_1^{libre}$ et $F_2^{libre}$ des profils d'éléments de vis sans fin voisins diffèrent l'une de l'autre quant à leur grandeur.

2. Eléments de vis sans fin selon la revendication 1, **caractérisés en ce que** la somme $SKW$ des angles d'engrènement des profils de vis sans fin généré et générateur est plus petite que $0,8 \cdot (2\pi - 4 \cdot \arccos\left(\frac{A}{DE}\right))$, de préférence plus petite que $0,6 \cdot (2\pi - 4 \cdot \arccos\left(\frac{A}{DE}\right))$, et de préférence particulière encore plus petite que $0,4 \cdot (2\pi - 4 \cdot \arccos\left(\frac{A}{DE}\right))$.

3. Eléments de vis sans fin selon une des revendications 1 ou 2, **caractérisés en ce que** le rapport de la plus grande surface de section transversale libre à la plus petite surface de section transversale libre de profils voisins vaut au moins 1,5, de préférence au moins 2.

4. Eléments de vis sans fin selon l'une quelconque des revendications 1 à 3, **caractérisés en ce que** le profil d'un élément d'une paire d'éléments est doté d'une zone de rétrécissement, qui s'étend sur un angle, rapporté au centre de rotation du profil, qui est plus grand que 90°, de préférence plus grand que 120°, de préférence encore plus grand que 180°, dans lesquels la zone de rétrécissement comprend un ou plusieurs arcs de cercle, et tous les points situés sur les arcs de cercle de la zone de rétrécissement présentent une distance comprise entre $(RA+RI)/2$ et $RA$ par rapport au centre de rotation du profil, $RA$ étant le rayon extérieur des vis sans fin et RI étant le rayon intérieur des vis sans fin.

5. Eléments de vis sans fin pour des arbres de vis sans fin tournant par paires dans le même sens pour des machines à vis sans fin à plusieurs arbres, dans lesquels les éléments de vis sans fin, qui sont opposés par paires sur les arbres de vis sans fin voisins par paires, sont en situation de raclage exact par paires, **caractérisés en ce que**

   - des éléments de vis sans fin, qui sont opposés par paires sur les arbres de vis sans fin voisins par paires, présentent un profil dissemblable,
   - dans une paire d'éléments voisins, un profil présente exactement une zone d'engrènement et le profil voisin présente exactement deux zones d'engrènement,
   - les surfaces de section transversale libres $F_1^{libre}$ et $F_2^{libre}$ de profils voisins diffèrent l'une de l'autre quant à leur grandeur.

6. Eléments de vis sans fin selon la revendication 5, **caractérisés en ce que** le rapport de la plus grande surface de section transversale libre à la plus petite surface de section transversale libre de profils voisins vaut au moins 1,2, de préférence au moins 1,4, et de préférence toute particulière encore au moins 1,6.

7. Eléments de vis sans fin selon une des revendications 5 ou 6, **caractérisés en ce que** les profils ont respectivement la symétrie plane.

8. Eléments de vis sans fin selon l'une quelconque des revendications 1 à 7, **caractérisés en ce que** le rapport du rayon extérieur de vis sans fin $RA$ à la distance des axes A se situe de préférence dans la plage de 0,51 à 0,7, de préférence encore dans la plage de 0,52 à 0,66 et de préférence toute particulière encore dans la plage de 0,57 à 0,63.

9. Eléments de vis sans fin selon l'une quelconque des revendications 1 à 8, **caractérisés en ce que** le profil des éléments de vis sans fin ne se compose que d'arcs de cercle.

10. Eléments de vis sans fin selon l'une quelconque des revendications 1 à 9, qui sont déduits de profils en situation de raclage exact par le fait qu'ils présentent des jeux entre des éléments de vis sans fin et le boîtier et/ou entre des éléments de vis sans fin voisins.

**11.** Utilisation d'éléments de vis sans fin selon l'une quelconque des revendications 1 à 10 dans une machine à vis sans fin à plusieurs arbres, de préférence dans une machine à vis sans fin à deux arbres.

**12.** Procédé pour l'extrusion de matières viscoélastiques dans une extrudeuse à deux vis sans fin ou dans une extrudeuse à plusieurs arbres avec utilisation des éléments de vis sans fin de l'invention selon l'une quelconque des revendications 1 à 10.

**13.** Machine à vis sans fin à plusieurs arbres avec des arbres de vis sans fin tournant par paires dans le même sens avec des éléments de vis sans fin, dans laquelle des éléments de vis sans fin, qui sont opposés par paires sur des arbres de vis sans fin voisins par paires, sont en situation de raclage exact par paires, **caractérisée en ce que** l'on utilise des éléments de vis sans fin selon la revendication 1.

**14.** Machine à vis sans fin à plusieurs arbres avec des arbres de vis sans fin tournant dans le même sens par paires avec des éléments de vis sans fin, dans laquelle des éléments de vis sans fin, qui sont opposés par paires sur des arbres de vis sans fin voisins par paires, sont en situation de raclage exact par paires, **caractérisée en ce que** l'on utilise des éléments de vis sans fin selon la revendication 5.

RA = 0.6042

| | | | | | | |
|---|---|---|---|---|---|---|
| 1) | R = 0.6042 | Mx = 0.0000 | | 1') | R = 0.3958 | Mx = 1.0000 |
| | α = 0.1047 | My = 0.0000 | | | α = 0.1047 | My = -0.0000 |
| 2) | R = 0.0000 | Mx = 0.6009 | | 2') | R = 1.0000 | Mx = 1.6009 |
| | α = 0.5200 | My = 0.0632 | | | α = 0.5200 | My = 0.0632 |
| 3) | R = 1.0000 | Mx = -0.2103 | | 3') | R = 0.0000 | Mx = 0.7897 |
| | α = 0.5630 | My = -0.5217 | | | α = 0.5630 | My = -0.5217 |
| 4) | R = 0.4375 | Mx = 0.0000 | | 4') | R = 0.5625 | Mx = 1.0000 |
| | α = 3.0424 | My = -0.0000 | | | α = 3.0424 | My = -0.0000 |
| 5) | R = 0.2399 | Mx = -0.0917 | | 5') | R = 0.7601 | Mx = 0.9083 |
| | α = 0.5768 | My = -0.1751 | | | α = 0.5768 | My = -0.1751 |
| 6) | R = 1.0000 | Mx = -0.1634 | | 6') | R = 0.0000 | Mx = 0.8366 |
| | α = 0.1794 | My = 0.5817 | | | α = 0.1794 | My = 0.5817 |
| 7) | R = 0.3958 | Mx = 0.0000 | | 7') | R = 0.6042 | Mx = 1.0000 |
| | α = 0.1047 | My = -0.0000 | | | α = 0.1047 | My = -0.0000 |
| 8) | R = 1.0000 | Mx = -0.2233 | | 8') | R = 0.0000 | Mx = 0.7767 |
| | α = 0.5960 | My = 0.5614 | | | α = 0.5960 | My = 0.5614 |
| 9) | R = 0.0000 | Mx = 0.6042 | | 9') | R = 1.0000 | Mx = 1.6042 |
| | α = 0.5960 | My = -0.0002 | | | α = 0.5960 | My = -0.0002 |

Fig. 1

RA = 0.6042

| | R | Mx | | R | Mx |
|---|---|---|---|---|---|
| 1) | R = 0.6042 | Mx = 0.0000 | 1') | R = 0.3958 | Mx = 1.0000 |
| | α = 0.0524 | My = 0.0000 | | α = 0.0524 | My = -0.0000 |
| 2) | R = 0.0000 | Mx = 0.6033 | 2') | R = 1.0000 | Mx = 1.6033 |
| | α = 0.5200 | My = 0.0316 | | α = 0.5200 | My = 0.0316 |
| 3) | R = 1.0000 | Mx = -0.2373 | 3') | R = 0.0000 | Mx = 0.7627 |
| | α = 0.5630 | My = -0.5100 | | α = 0.5630 | My = -0.5100 |
| 4) | R = 0.4375 | Mx = 0.0000 | 4') | R = 0.5625 | Mx = 1.0000 |
| | α = 1.2765 | My = -0.0000 | | α = 1.2765 | My = -0.0000 |
| 5) | R = 0.1725 | Mx = -0.1975 | 5') | R = 0.8275 | Mx = 0.8025 |
| | α = 0.4753 | My = 0.1767 | | α = 0.4753 | My = 0.1767 |
| 6) | R = 1.0000 | Mx = 0.6033 | 6') | R = 0.0000 | Mx = 1.6033 |
| | α = 0.2020 | My = -0.0316 | | α = 0.2020 | My = -0.0316 |
| 7) | R = 0.3958 | Mx = 0.0000 | 7') | R = 0.6042 | Mx = 1.0000 |
| | α = 0.0525 | My = 0.0001 | | α = 0.0525 | My = 0.0001 |
| 8) | R = 0.3958 | Mx = 0.0000 | 8') | R = 0.6042 | Mx = 1.0000 |
| | α = 0.0524 | My = 0.0001 | | α = 0.0524 | My = 0.0001 |
| 9) | R = 1.0000 | Mx = 0.6033 | 9') | R = 0.0000 | Mx = 1.6033 |
| | α = 0.5200 | My = 0.0317 | | α = 0.5200 | My = 0.0317 |
| 10) | R = 0.0000 | Mx = -0.2373 | 10') | R = 1.0000 | Mx = 0.7627 |
| | α = 0.5630 | My = -0.5099 | | α = 0.5630 | My = -0.5099 |
| 11) | R = 0.5625 | Mx = 0.0000 | 11') | R = 0.4375 | Mx = 1.0000 |
| | α = 1.2765 | My = 0.0001 | | α = 1.2765 | My = 0.0001 |
| 12) | R = 0.8275 | Mx = -0.1975 | 12') | R = 0.1725 | Mx = 0.8025 |
| | α = 0.4753 | My = 0.1767 | | α = 0.4753 | My = 0.1767 |
| 13) | R = 0.0000 | Mx = 0.6033 | 13') | R = 1.0000 | Mx = 1.6033 |
| | α = 0.2020 | My = -0.0316 | | α = 0.2020 | My = -0.0316 |
| 14) | R = 0.6042 | Mx = 0.0000 | 14') | R = 0.3958 | Mx = 1.0000 |
| | α = 0.0525 | My = 0.0001 | | α = 0.0525 | My = 0.0001 |

Fig. 2

RA = 0.6042

| 1) | R = 0.3958 | Mx = 0.0000 | 1') | R = 0.6042 | Mx = 1.0000 |
|---|---|---|---|---|---|
| | α = 0.3491 | My = 0.0000 | | α = 0.3491 | My = -0.0000 |
| 2) | R = 1.0000 | Mx = -0.5677 | 2') | R = 0.0000 | Mx = 0.4323 |
| | α = 0.5960 | My = -0.2066 | | α = 0.5960 | My = -0.2066 |
| 3) | R = 0.0000 | Mx = 0.0180 | 3') | R = 1.0000 | Mx = 1.0180 |
| | α = 0.5960 | My = 0.6039 | | α = 0.5960 | My = 0.6039 |
| 4) | R = 0.6042 | Mx = -0.0000 | 4') | R = 0.3958 | Mx = 1.0000 |
| | α = 0.7302 | My = -0.0000 | | α = 0.7302 | My = -0.0000 |
| 5) | R = 0.0000 | Mx = -0.3894 | 5') | R = 1.0000 | Mx = 0.6106 |
| | α = 0.4681 | My = 0.4619 | | α = 0.4681 | My = 0.4619 |
| 6) | R = 0.9583 | Mx = 0.4924 | 6') | R = 0.0417 | Mx = 1.4924 |
| | α = 1.1532 | My = 0.0867 | | α = 1.1532 | My = 0.0867 |
| 7) | R = 0.0000 | Mx = -0.2081 | 7') | R = 1.0000 | Mx = 0.7919 |
| | α = 0.4681 | My = -0.5672 | | α = 0.4681 | My = -0.5672 |
| 8) | R = 0.6042 | Mx = -0.0000 | 8') | R = 0.3958 | Mx = 1.0000 |
| | α = 0.7302 | My = 0.0000 | | α = 0.7302 | My = 0.0000 |
| 9) | R = 0.0000 | Mx = 0.2232 | 9') | R = 1.0000 | Mx = 1.2232 |
| | α = 0.5960 | My = -0.5614 | | α = 0.5960 | My = -0.5614 |
| 10) | R = 1.0000 | Mx = -0.6042 | 10') | R = 0.0000 | Mx = 0.3958 |
| | α = 0.5960 | My = 0.0002 | | α = 0.5960 | My = 0.0002 |

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 0209919 A
- WO 02076707 A
- JP 58017825 B
- WO 02070231 A
- EP 1013402 A
- WO 0020189 A
- WO 2011039016 A
- EP 2009003549 W

### In der Beschreibung aufgeführte Nicht-Patentliteratur

- **KOHLGRÜBER.** Der gleichläufige Doppelsclneck-enex-truder. Hanser Verlag, 2007